Europäisches Patentamt

European Patent Office

Office européen des brevets

(11) Numéro de publication: **0 338 642**
**A2**

## (12) DEMANDE DE BREVET EUROPEEN

(21) Numéro de dépôt: 89200987.9

(51) Int. Cl.⁴: **B60C 25/06**

(22) Date de dépôt: **18.04.89**

(30) Priorité: 20.04.88 BE 8800453
30.03.89 BE 8900353

(43) Date de publication de la demande:
**25.10.89 Bulletin 89/43**

(84) Etats contractants désignés:
**BE DE ES FR GB IT NL**

(71) Demandeur: **du Quesne, Francis**
**Kleistraat 138**
**B-2630 Aartselaar(BE)**

(72) Inventeur: **du Quesne, Francis**
**Kleistraat 138**
**B-2630 Aartselaar(BE)**

(74) Mandataire: **Ottelohe, Jozef René**
**Bureau Ottelohe J.R. Postbus 3 Fruithoflaan**
**105**
**B-2600 Antwerpen (Berchem)(BE)**

(54) **Appareil pour monter les pneus des roues de véhicules automobiles.**

(57) L'appareil se compose en ordre principal d'un bâti (1), d'une tête (2) avec une ouverture central (4) et fixée sur la bâti et sur laquelle la roue (A) à fixer est posée, d'un disque amovible (23) pour exercer une pression sur la roue et dont fait partie un manchon (19) pourvu d'une ouverture axiale (20) et qui s'ajuste dans l'ouverture (4) de la tête, d'un moyen de serrage (6 à 13) en dessous de la tête pour attirer et coincer le manchon (19) et pour serrer le disque (23) contre la roue, d'un mécanisme à tringles (13-15) et pédale (16) sur le bâti pour la commande du moyen de serrage, d'un axe de pivotement (28) amovible qui s'ajuste dans l'ouverture (20) du manchon (19) et y peut tourner, d'un deuxième moyen de serrage monté d'une manière rotative sur le disque (23) et servant à la fixation de l'axe de pivotement, d'un levier (36) monté sur l'axe de pivotement (28), d'au moins un galet de montage (47) monté sur le levier et dont la surface de roulement présente une gorge et servant à rouler le talon (50) du pneu par-dessus le rebord (52) de la jante de roue, et d'un moyen d'arrêt (54) faisant partie de l'axe de pivotement (28) et destiné à maintenir le pneu (51) pendant son montage.

*Fig. 2*

## Appareil pour monter les pneus des roues de véhicules automobiles.

La présente invention concerne un appareil pour monter un pneu sur une roue de véhicules automobiles, plus spécialement d'un pneu dont le talon du pneu doit être enroulé par-dessus le rebord de la jante de roue.

Un tel appareil pour le montage de pneus d'automobiles est déjà connu mais se compose de plusieurs parties compliquées et coûteuses, parmi lesquelles un mécanisme comportant des leviers et des ressorts et exigeant de nombreux réglages.

En vue de remédier à ces inconvénients, on a réalisé conforme à l'invention, un appareil simple et peu coûteux. En outre peu de manipulations sont nécessaires pour monter un pneu sur une roue et le pneu ne peut être coincé entre la jante de roue et l'outil de montage.

Cet appareil conforme à l'invention se compose en ordre principal d'un bâti, d'une tête avec une ouverture centrale et fixée sur le bâti et sur laquelle la roue à fixer est posée, d'un disque amovible pour exercer une pression sur la roue et dont fait partie un manchon pourvu d'une ouverture axiale et qui s'ajuste dans l'ouverture de la tête, d'un moyen de serrage en dessous de la tête pour attirer et coincer le manchon et pour serrer le disque contre la roue, d'un méchanisme à tringles et pédale sur le bâti pour la commande du moyen de serrage, d'un axe de pivotement amovible qui s'ajuste dans l'ouverture du manchon et y peut tourner, d'un deuxième moyen de serrage monté d'une manière rotative sur le disque et servant à la fixation de l'axe de pivotement, d'un levier monté sur l'axe de pivotement, d'au moins un galet de montage monté sur le levier et dont la surface de roulement présente une gorge servant à rouler le talon du pneu par-dessus le rebord de la jante de roue, et d'un moyen faisant partie de l'axe de pivotement et destiné à maintenir le pneu pendant son montage.

A titre d'exemple et sans le moindre caractère limitatif, il est donné ci-après une description plus détaillée d'une forme d'exécution choisie de l'appareil conforme à l'invention. Cette description se réfère aux dessins annexés, dans lesquels :

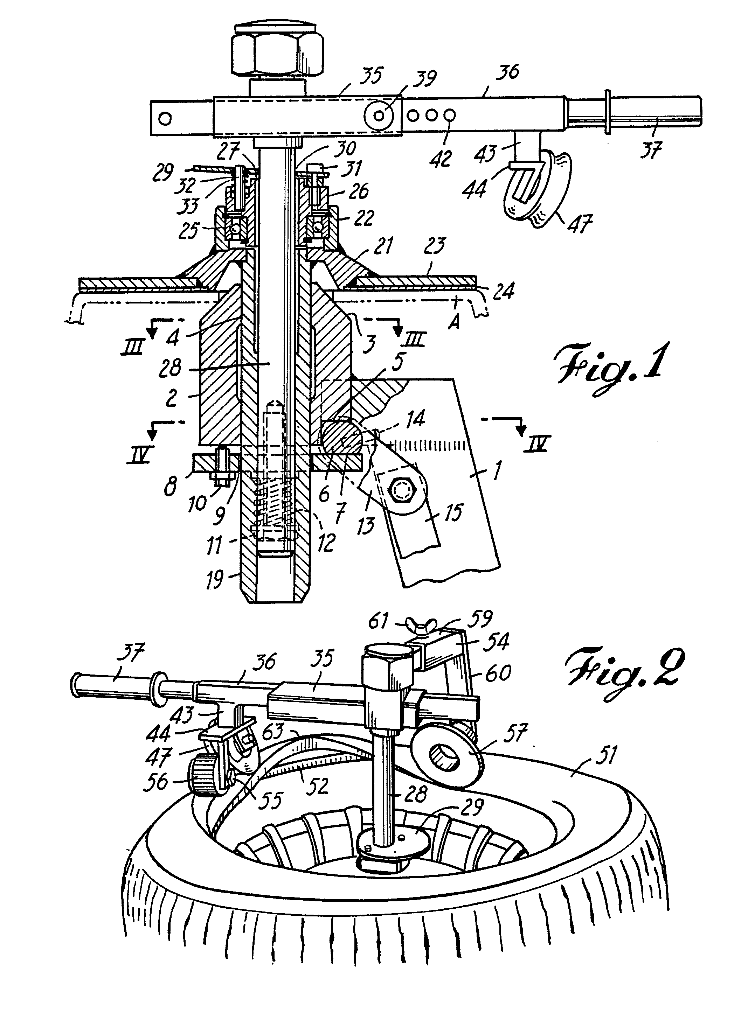

la fig. 1 représente une coupe longitudinale de la partie supérieure de l'appareil;

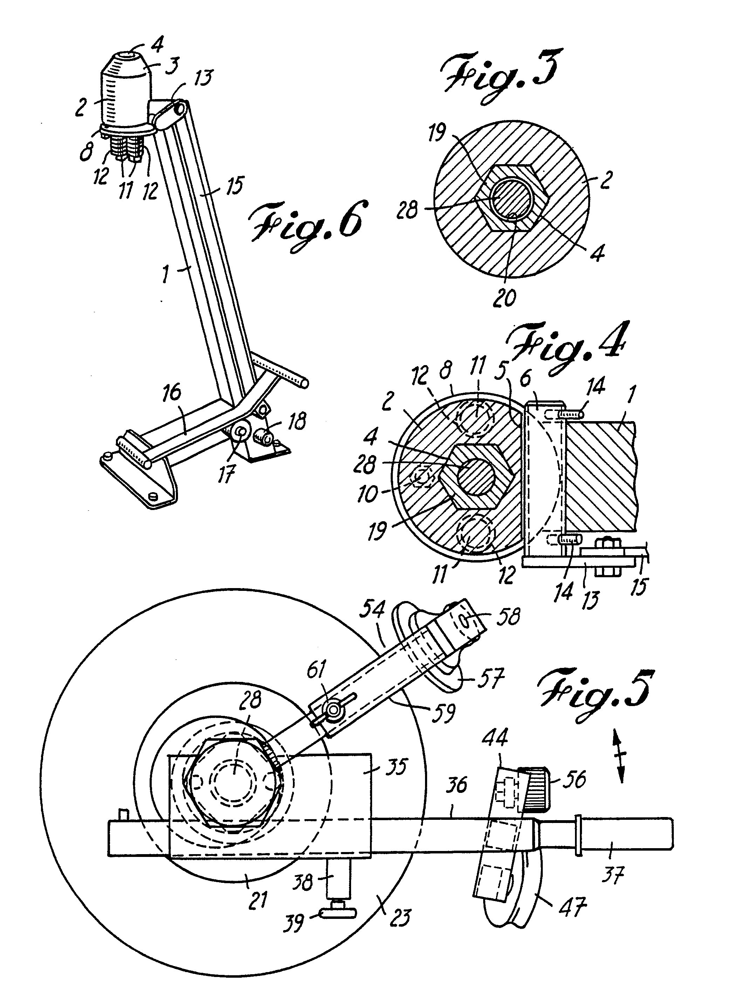

la fig. 2 représente une vue en perspective de la partie supérieure de l'appareil;

la fig. 3 est une coupe transversale selon la ligne III-III de la fig. 1;

la fig. 4 est une coupe transversale selon la ligne IV-IV de la fig. 1;

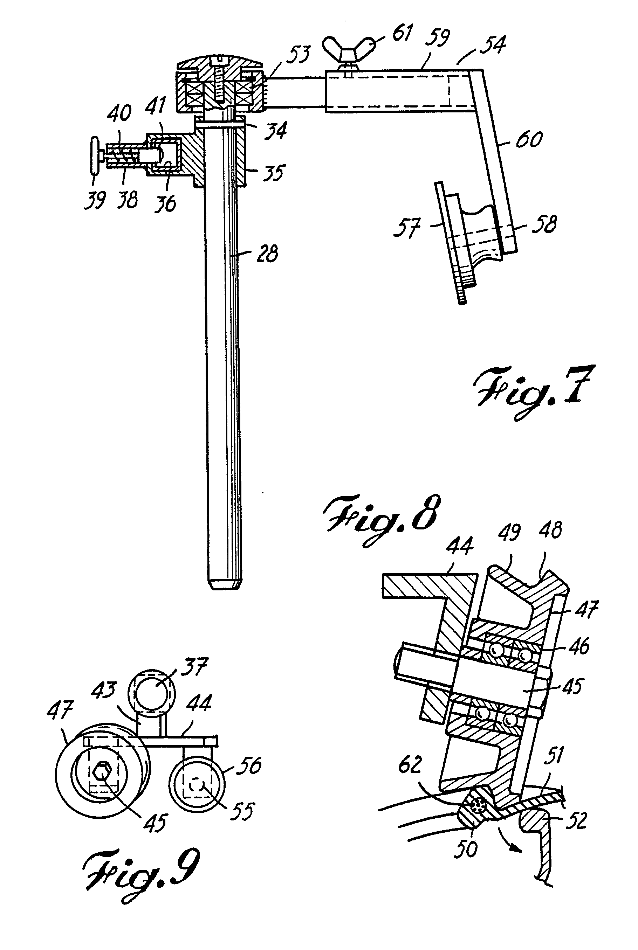

la fig. 5 est une vue de dessus de l'appareil;

la fig. 6 est une vue en perspective du bâti de l'appareil;

la fig. 7 est une coupe longitudinale du porte-levier de l'appareil.

la fig. 8 est une coupe longitudinale du galet de pression et d'une partie du pneu à monter et de la jante de roue;

la fig. 9 est une vue de face du galet de montage et de la roulette de pression.

Dans ces figures on remarque que l'appareil comporte un bâti 1 qui est pourvu à la partie supérieure d'une tête 2 pourvue d'une surface conique 3 qui s'ajuste dans l'orifice central de la roue à fixer. Dans cette tête il est prévu une ouverture à section hexagonale 4. En dessous de la tête 2 et dans un évidement anguleux 5 il est monté librement une came 6 cylindrique présentant une surface plane 7 reposant sur une plaque de serrage 8 pourvue d'un trou à section hexagonale 9. Cette plaque qui est aussi pourvue d'une vis de réglage 10 est librement suspendue autour de deux boulons 11 vissés dans la face inférieure de la tête et est pressée d'une part contre la came 6 et d'autre part avec la vis de réglage contre la surface inférieure de la tête 2 au moyen de deux ressorts de pression 12 disposés autour des deux boulons 11 et entre la tête de ces boulons et la face inférieure de la plaque 8. Une extrémité de la came 6 est pourvue d'une bielle 13 et dans cheque extrémité de la came est fixé un ergot 14, entre lesquels le bâti est disposé, de sorte que la came ne puisse se déplacer axialement dans l'évidement 5. La bielle 13 est raccordée pivotablement à une tringle 15 qui en bas est raccordée à une double pédale 16 suspendue autour d'un pivot fixe 17 et dont le déplacement est limité par une butée 18 fixée sur le bâti 1. Dans l'ouverture 4 de la tête et le trou 9 de la plaque 8 s'ajuste un manchon amovible 19 à section hexagonale pourvu d'une ouverture axiale cylindrique 20 et faisant partie du dispositif pour la fixation d'une roue A avec un orifice central de n'importe quel diamètre sur la surface conique 3 de la tête 2. Ce manchon forme un tout avec une coiffe conique 21, un collet 22 et un disque 23 pourvu d'un disque élastique 24, qui sont placés sur la roue A pour la fixation de cette roue. Lorsqu'on enfonce la pédale 16, la came 6 pivote autour de son axe dans l'évidement 5 par l'intermédiaire de la tringle 15 et la bielle 13, de sorte qu'on exerce une pression sur la plaque de serrage 8, celle-ci pivote autour de la vis de réglage 10 et prend une position oblique, d'où il s'ensuit que le manchon est saisi, tiré vers le bas et est coincé dans le trou 9 de la plaque de serrage 8. A la fin de ce mouvement le disque élastique 24 est pressé contre la roue A et celle-ci est fixée fermement sur la surface conique 3 de la tête 2. Dans le collet 22 il est monté un bloc carré 26 par l'entremise d'un roulement à billes 25. Ce bloc est pourvu d'une ouverture centrale 27 dans laquelle peut coulisser librement un axe de pivotement cylindrique amovible 28 qui peut aussi coulisser dans l'ouverture 20 du manchon 19, lequel axe fait partie du dispositif pour le montage du pneu. Sur le bloc carré 26 est monté une plaque de serrage 29 pourvue d'une ouverture 30. Cette plaque est pivotable par rapport à une vis 31 dans le bloc 26. Un tenon de guidage 32 fixé dans le bloc, traverse librement la plaque de serrage. Entre ce bloc 26 et la plaque de serrage 29 il est disposé un ressort de pression 33 poussant la plaque dans une position oblique, de sorte que l'axe de pivotement 28 traversant l'ouverture 30 est accouplé dans cette position avec le bloc pivotable 26. Lorsqu'on introduit l'axe de pivotement 28 dans l'ouverture 27 du bloc 26 et l'ouverture 20 du manchon 19, la plaque de serrage 29 occupe une position horizontale, d'où il s'ensuit que l'axe de pivotement 28 est déplaçable vers le bas, tandis que lorsqu'on tâche de retirer l'axe de pivotement hors du bloc 26 et du manchon 19, cette plaque 29 exerce une pression ferme sur l'axe de pivotement. Par conséquent il est seulement possible de retirer l'axe de pivotement 28 lorsqu'on pousse la pla que de serrage 29 vers le bas. L'axe de pivotement 28 est fixé dans un porte-levier 35 au moyen d'une goupille 34 et dans lequel peut coulisser un levier 36 pourvu d'une poignée 37. Sur le porte-levier est soudé un anneau 38 dans lequel est disposé un cliquet 39 pourvu d'un ressort de pression 40 et d'un doigt 41. Ce doigt coopère avec un des orifices 42 prévus dans le levier 36 et par lesquels il est possible de bloquer le levier dans une position choisie selon le diamètre de la roue à fixer. Le levier 36 est pourvu d'un bras 43 portant à son extrémité un support 44 auquel est fixé un axe 45 autour duquel est monté un galet de montage 47 par l'entremise de deux roulements à billes 46. Ce galet de montage est utilisé pour le montage du pneu sur une roue A à fixer sur l'appareil. Ce galet de montage est dans un plan vertical monté en oblique et en déclivité vers le centre de la roue et dans un plan horizontal et dans la direction de roulement du galet monté en oblique et en déclivité vers l'extérieur de la roue, afin de pouvoir saisir et guider le talon du pneu pendant son montage sur la roue. La surface de roulement de ce galet présente une gorge à deux surfaces annulaires 48-49 formant entre-elles un angle. La surface annulaire 48 sert à pousser progressivement le talon 50 du pneu 51 dans la direction du centre de la roue et l'autre surface annulaire 49 à pousser le talon 50 du pneu vers le bas et par-dessus le rebord de la jante de roue 52, sans que le pneu ne soit coincé entre la jante de roue et la galet. Le support 44 est aussi pourvu d'un axe 55 autour duquel est monté une roulette de pression 56 dont la circonférence est dentelée. Cette roulette 56 est pourvue d'un moyen (non représenté) lui permettant de ne tourner que dans un sens. Afin de maintenir le pneu pendant son montage, il est monté à l'extrémité supérieure de l'axe de pivotement 28 un moyen d'arrêt 54, par l'entremise de roulement à billes 53. Ce moyen d'arrêt comporte un galet d'arrêt 57 monté sur un axe fixe 58 fixé sur un bras horizontal 59 et disposé en oblique et en déclivité vers l'extérieur de la roue. Ce galet sert à exercer une pression sur la joue du pneu 51 et à maintenir immobile ce pneu pendant son montage. Le bras 59 comporte une partie oblique 60 laquelle peut coulisser à l'égard du bras 59. Un moyen de blocage 61 faisant partie du moyen d'arrêt 54, permet de bloquer le galet d'arrêt 57 dans une position choisie, selon le diamètre de la roue à fixer.

Lorsqu'une roue A est fixée sur la tête 2 de l'appareil, tel que décrit ci-devant et que l'axe de pivotement 28 est introduit et bloqué dans le bloc 26 et le manchon 19, le galet de montage 47, le roulette de pression 56 et le galet d'arrêt 57 reposent sur le pneu 51. Après cela, on écarte, suivant un mouvement circulaire, le galet d'arrêt 57 du galet de montage 47 et de la roulette de pression 56, après quoi le galet d'arrêt 57 maintient le pneu. En tirant ensuite le levier 36 suivant un mouvement circulaire, le galet de montage 47 saisit le talon 50 du pneu et pousse celui-ci pour une partie par-dessus le rebord 52 de la jante de roue, tandis que la roulette de pression 56 roule librement sur le pneu. Puis on pousse le levier 36 dans la direction opposée. Le galet d'arrêt 57 maintient le pneu à sa place pendant ce mouvement, tandis que la roulette de pression 56 qui ne tourne pas autour de son axe 55 dans cette direction du déplacement du levier, pousse avec sa surface de roulement dentelée sur le pneu, de sorte que celui-ci est comprimé, le fil d'acier annulaire 62 contenu dans le talon 50 du pneu est poussé vers la partie du talon du pneu déjà monté dans la roue. De ce fait la boucle 63 qui déforme la circonférence du talon du pneu pendant son montage, est maintenu aussi petite que possible. En exerçant successivement un effort de traction et de pression sur le levier 36, suivant un mouvement circulaire, le talon 50 du pneu est poussé progressivement par-dessus le rebord 52 de la jante de roue, par le galet de montage 47.

Par la coopération du galet de montage 47, de la roulette de pression 56 et du galet d'arrêt 57, on obtient que la boucle 63 qui se forme dans le talon du pneu pendant son montage, est maintenue au minimum, que la déformation du fil d'acier annulaire 62 contenu dans le talon 50 de pneu est relativement petite et qu'on prévient ainsi la déformation permanente de ce fil après le montage du pneu. Il en résulte que le pneu peut être bien monté et qu'il n'y a pas de jeu entre la partie circulaire du talon du pneu et la partie circulaire intérieure de la roue. Enfin, le montage du pneu sur la roue, est considérablement simplifié par les éléments décrits ci-devant.

Il va de soi que la forme, les dimensions et la disposition relative des éléments décrits ci-dessus peuvent varier à condition de rester dans le cadre de la présente invention et même que certains éléments pourront être remplacés par d'autres qui poursuivent le même but.

## Revendications

1.- Appareil pour monter les pneus des roues de véhicules automobiles, caractérisé par le fait qu'il se compose en ordre principal d'un bâti (1), d'une tête (2) avec une ouverture centrale (4) et fixée sur le bâti et sur laquelle la roue (A) à fixer est posée, d'un disque amovible (23) pour exercer une pression sur la roue et dont fait partie un manchon (19) pourvu d'une ouverture axiale (20) et qui s'ajuste dans l'ouverture (4) de la tête, d'un moyen de serrage (6 à 13) en dessous de la tête pour attirer et coincer le manchon (19) et pour serrer le disque (23) contre la roue, d'un mécanisme à tringles (13-15) et pédale (16) sur le bâti pour la commande du moyen de serrage, d'un axe de pivotement (28) amovible qui s'ajuste dans l'ouverture (20) du manchon (19) et y peut tourner, d'un deuxième moyen de serrage monté d'une manière rotative sur le disque (3) et servant à la fixation de l'axe de pivotement, d'un levier (36) monté sur l'axe de pivotement (28), d'au moins un galet de montage (47) monté sur le levier et dont la surface de roulement présente une gorge et servant à rouler le talon (50) du pneu par-dessus le rebord (52) de la jante de roue, et d'un moyen d'arrêt (54) faisant partie de l'axe de pivotement (28) et destiné à maintenir le pneu (51) pendant son montage.

2.- Appareil conforme à la revendication 1, caractérisé par le fait que le levier (36) est pourvu d'un support (44) portant le galet de montage (47) et une roulette de pression (56) servant à pousser progressivement le talon (50) du pneu vers la partie intérieure de la roue et à pousser le fil d'acier annulaire (62) contenu dans ce talon, afin de limiter la déformation de ce fil pendant le montage de pneu.

3.- Appareil conforme à la revendication 1, caractérisé par le fait que le galet de montage (47) est dans un plan vertical monté en oblique et en déclivité vers le centre de la roue et dans un plan horizontal et dans la direction de roulement du galet monté en oblique et en déclivité vers l'extérieur de la roue, où la surface de roulement du galet présentant une gorge comporte deux surfaces annulaires (48-49) formant entre-elles un angle et dont une surface annulaire (48) sert à pousser progressivement le talon (50) du pneu (51) dans la direction du centre de la roue et l'autre surface annulaire (49) à pousser le talon (50) du pneu vers le bas et par-dessus le rebord (52) de la jante de roue.

4.- Appareil conforme à la revendication 2, caractérisé par le fait que la roulette de pression (56) est pourvue d'un moyen permettant à la roulette de ne tourner que dans un sens et que la circonférence de cette roulette est dentelée.

5.- Appareil conforme à la revendication 1, caractérisé par le fait que la partie supérieure de la tête (2) de l'appareil présente une surface conique (3) pouvant porter la roue avec un orifice central de n'importe quel diamètre.

6.- Appareil conforme à la revendication 1, caractérisé par le fait que sur l'axe de pivotement (28) est fixé un porte-levier (35) dans lequel de levier (36) est monté déplaçable et que le porte-levier est pourvu d'un moyen (39) pour la fixation du levier dans diverses positions dans le porte-levier.

7.- Appareil conforme à la revendication 6, caractérisé par le fait que le moyen pour la fixation du levier (36) dans le porte-levier (35), se compose d'un cliquet (39) pourvu d'un ressort de pression et dont l'extrémité libre (41) coopère avec une des ouvertures (42) pourvues dans le levier (36).

8.- Appareil conforme à la revendication 1, caractérisé par le fait que le moyen (54) de maintenir le pneu pendant son montage, se compose d'un bras horizontal (59) dont une extrémité est montée de manière pivotante autour de l'axe de pivotement (28) et l'autre extrémité est prolongée par une partie oblique (60) et en déclivité vers l'extérieur de la roue, sur quelle partie est monté un galet d'arrêt (57) destiné à maintenir le pneu immobile pendant son montage.

9.- Appareil conforme à la revendication 1, caractérisé par le fait que le manchon (19) du disque présente une section hexagonale et que le moyen de serrage se compose d'une plaque de serrage (8) pourvue d'une ouverture hexagonale (9) traversée par le manchon (19), d'une vis de réglage (10) vissée dans la plaque de serrage et reposant contre la surface inférieure de la tête (2) de l'appareil, de deux boulons de guidage (11) vissés dans la surface inférieure de la tête de l'appareil et sur lesquels la plaque (8) peut se déplacer, d'un ressort de pression (12) entre chaque boulon (11) et la plaque du serrage (8), d'une came (6) entre la tête (2) de l'appareil et la plaque (8) pour mener la plaque dans une position oblique par rapport au manchon (19) et pour saisir et attirer vers le bas le manchon et presser le disque (23), et d'un méchanisme à tringles (13-15-16) pour la commande de la came.

10.- Appareil conforme à la revendication 1, caractérisé par le fait que l'ouverture (4) dans la tête (2) de l'appareil présente une section hexagonale dans laquelle s'ajuste le manchon (19) et que le disque (23) pour la fixation de la roue est pourvu d'un collet (22) dans lequel il est monté d'une manière rotative un bloc (26) sur lequel il est fixé le moyen de serrage (29 à 33).

11.- Appareil conforme à la revendication 10, caractérisé par le fait que le moyen de serrage (29 à 33) pour la fixation de l'axe de pivotement (28), se compose d'une plaque de serrage (29), d'une vis à charnière (31) pour la plaque de serrage, d'un tenon de guidage (32) fixé dans le bloc (26) et traversant la plaque (29) et d'un ressort de pression (33) disposé entre le bloc (26) et la plaque de serrage (29) qui pousse cette plaque dans une position oblique.

12.- Appareil conforme à la revendication 9, caractérisé par le fait que le mécanisme à tringles (13 à 15) pour la commande de la came (6), est monté d'une manière pivotable à une double pédale (16) fixée d'une manière pivotable au bâti (1).

EP 0 338 642 A2

*Fig.1*

*Fig.2*

Fig.3

Fig.6

Fig.4

Fig.5

*Fig.7*

*Fig.8*

*Fig.9*